# EUROPÄISCHE PATENTSCHRIFT

(11) **EP 1 834 517 B1**
(45) Veröffentlichungstag und Bekanntmachung des Hinweises auf die Patenterteilung: **03.09.2008**
(21) Anmeldenummer: 07001675.3
(22) Anmeldetag: 26.01.2007
(51) Int. Cl.: A01D 41/14

(54) **Selbstfahrende Erntemaschine**
Self-propelled harvester
Moissonneuse automotrice

(30) Priorität: 18.03.2006 DE 102006012546
(43) Veröffentlichungstag der Anmeldung: 19.09.2007
(73) Patentinhaber: Carl Geringhoff GmbH & Co. KG, 59227 Ahlen (DE)
(72) Erfinder: Surmann, Klemens, 59227 Ahlen (DE); Webermann, Dirk, 48301 Nottuln (DE)
(74) Vertreter: Habbel, Ludwig

(56) Entgegenhaltungen:
- EP-A1- 0 250 649
- DE-U1- 9 422 102

## Beschreibung

Die Erfindung bezieht sich auf eine selbstfahrende Erntemaschine mit in Fahrtrichtung abstandsveränderbarer, zweigeteilter Schneidwerksmulde, deren einer Teil ortsfest mit der Erntemaschine verbunden ist und deren anderer Teil Messer tragende und führende Messerbalken trägt und abstandsveränderbar mit dem ortsfesten Teil der Schneidwerksmulde verbunden ist, wobei der Schneidwerksmulde eine lageveränderbare Einzugshaspel zugeordnet ist.

In jüngster Zeit sind Mähdrescher bekannt geworden, deren Schneidwerksmulde zweigeteilt ist, und zwar zweigeteilt derart, daß ein Teil der Schneidwerksmulde in Fahrtrichtung vor- oder zurückgeschoben werden kann, so wie dies beispielsweise in der EP 0 250 649 A1 beschrieben ist. Eine solche Ausbildung ist zweckmäßig, um einen optimalen Einzug des Halmgutes bei möglichst geringem Kornverlust zu erzielen. Um bei einer so ausgerüsteten selbstfahrenden Erntemaschine zu verhindern, daß die Haspel bzw. deren Zinken mit dem mehr oder weniger weit ausgefahrenen Messerbalken kollidieren, sind entsprechende Vorrichtungen bekannt geworden, so daß unabhängig von der Relativlage des Messerbalkens eine Kollision mit der Haspel vermieden wird.

Die bisher bekannten Erntemaschinen, die mit in Fahrtrichtung abstandsveränderbaren Schneidwerksmulde ausgerüstet sind, sind in Querrichtung zur Fahrtrichtung gesehen nur als einteilige Erntevorsätze bekannt geworden.

Der Erfindung liegt die Aufgabe zugrunde, eine selbstfahrende Erntemaschine mit in Fahrtrichtung abstandsveränderbaren zweigeteilten Schneidwerksmulden vorzuschlagen, bei der diese Schneidwerksmulde trotz großer Arbeitsbreite auch auf normale Straßenbreite zusammengeklappt werden kann.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, daß quer zur Fahrtrichtung, d. h. um in Fahrtrichtung ausgerichtete Schwenkachsen eine mehrteilige Schneidwerksmulde, eine mehrteilige Haspel und ein mehrteiliger Messerbalken mit den entsprechenden Messern vorgeschlagen wird, wobei die Bauteile klappbar aneinander anschließen.

Hierbei ist gemäß der Erfindung vorgesehen, daß die einzelnen Messer und Schneidwerksmuldenteile bzw. Messerbalkenteile in Arbeitsposition über je eine Verriegelung miteinander verbunden sind, so daß sie synchron miteinander in Fahrtrichtung verfahren werden können.

Gemäß einer bevorzugten Ausführungsform der Erfindung ist vorgesehen, daß die zwei- oder mehrteiligen Messer jeweils über einen Verriegelungsbolzen an den jeweiligen Trennstellen formschlüssig miteinander verbindbar sind und eine Messerstellvorrichtung vorgesehen ist, die dafür sorgt, daß die Messer in eine Mittelstellung zwischen die Messerfinger geführt werden, bevor der Verriegelungsbolzen einrastet.

Hierbei wird vorgeschlagen, daß der Verriegelungsbolzen und die Messerstellvorrichtung mit den Messern verschiebbar sind.

Die bereits erwähnte Verriegelung für die Schneidwerksmulde ist mit den verschiebbaren Schneidwerksmuldenteilen bzw. Messerbalkenteilen verbunden, wird aber durch einen auf dem ortsfesten Schneidwerksmuldenteil angeordneten Betätigungsanschlag ausgelöst.

Im Bereich der jeweiligen Trennstelle der Schneidwerksmuldenteile ist ein Hebel gelagert, der eine erste und zweite Stellvorrichtung trägt. Der Hebel ist um eine ortsfeste Drehachse schwenkbar und die erste Stellvorrichtung kommt mit einem ebenfalls ortsfest gelagerten Schwinghebel in Kontakt, und zwar bevor die zweite Stellvorrichtung mit einer mit dieser Stellvorrichtung in Kontakt kommenden Schiebestange in Kontakt kommt.

Durch diese Anordnung wird der Schwinghebel um eine Drehachse geschwenkt und kommt mit einem Druckarm mit einer Messerstellvorrichtung in Kontakt, durch die nunmehr die Messer in die Mittelstellung zwischen den Messerfingern geführt werden. Anschließend gelangt die zweite Stellvorrichtung mit der Schiebestange in Kontakt und verschiebt diese gegen die Rückstellkraft einer Feder, wodurch gleichzeitig sich ein entsprechender Bolzen in einer Kurvenbahn verschiebt und hierdurch einen Verriegelungshebel anhebt, der ebenfalls um einen Drehpunkt schwenkbar ist und der an seinem anderen Ende den Verriegelungsbolzen trägt. Die Betätigungsstange, die den die erste und zweite Stellvorrichtung tragenden Hebel betätigt, wird über eine hydraulische Kolbenzylinderanordnung angetrieben.

Der Verriegelungsbolzen und ein entsprechender Zentrierungsbolzen sind als Konusbolzen ausgebildet, so daß ein leichtes Einschieben der Bolzen in die zugehörigen Hülsen möglich wird. Schließlich ist es von Bedeutung, daß die eigentliche Schiebestange nur linear betätigt wird, d. h. sich linear verschiebt, aber bewirkt, daß der Verriegelungshebel um eine Drehachse geschwenkt wird.

Die Verriegelung der benachbarten Schneidwerksmuldenteile erfolgt über einen Riegelbolzen und einen Riegelhaken, die auf den verschiebbaren Messerbalkenteilen angeordnet sind, wobei ein Entriegeln der miteinander verbundenen Schneidwerksmuldenteile automatisch dann erfolgt, wenn die Messerbalkenteile in die hintere Position gefahren werden.

Hierbei ist an dem ortsfesten Schneidwerksmuldenteil ein Betätigungsanschlag vorgesehen, der mit dem Riegelhaken dann in Kontakt kommt, wenn dieser bis an das ortsfeste Teil zurückgeführt wird. Hierbei wirkt der Druck des Betätigungsanschlages gegen die Wirkung einer Rückstellfeder, die dafür Sorge trägt, daß, sobald sich das verschiebbare Muldenteil nach vorne bewegt, der Riegelhaken wieder mit dem Riegelbolzen in Verbindung kommt.

Die einzelnen Messerbalkenteile werden mit Hilfe eines Hydraulikzylinderpaares verfahren, welches als Master-Slave-System ausgebildet ist. "Master-Slave-System" bedeutet, daß die Querschnittsfläche der Zylinderringseite gleich der Kolbenfläche eines zweiten Zylinders ist.

Bei einer dreiteiligen Schneidwerksmulde weisen nur die äußeren Messerbalkenteile entsprechende Hydraulikzylinderpaare auf.

Ein Ausführungsbeispiel der Erfindung wird nachfolgend anhand der Zeichnungen erläutert. Die Zeichnungen zeigen dabei in
- Fig. 1: eine Ansicht von der Rückseite eines Erntevorsatzes für eine selbstfahrende Erntemaschine mit auf das Mittelteil aufgklappten Seitenteilen, in
- Fig. 2: in wesentlich größerem Maßstab eine Ansicht auf die verschiebbare Schneidwerksmulde mit zugehöriger Haspel und ausgefahrenem Schneidwerksmuldenteil, in
- Fig. 3: eine Ansicht auf die Verriegelungseinrichtung für die Messerbalkenteile und die Messerpositioniervorrichtung, in
- Fig. 4: eine Ansicht gemäß Fig. 3 in einer anderen Arbeitsstellung, in
- Fig. 5: die beiden Messerbalkenteile und die beiden Schneidwerksmuldenteile im auseinandergefahrenen Zustand, in
- Fig. 6: die Verriegelungsvorrichtung für die Messerbalkenteile und damit die Schneidwerksmuldenteile, in
- Fig. 7 und Fig. 8 Fig. 9: eine Schnittdarstellung der Verriegelungsvorrichtung gemäß Fig. 6, in eine Ansicht auf die auseinandergefahrenen Schneidwerksmuldenteile von oben gesehen, in
- Fig. 10: eine Ansicht gemäß Fig. 9, aber im zusammengefahrenen Zustand der Schneidwerksmuldenteile und Messerbalkenteile und in
- Fig. 11: eine Schaltskizze für die zum Einsatz kommenden Hydraulikzylinder.

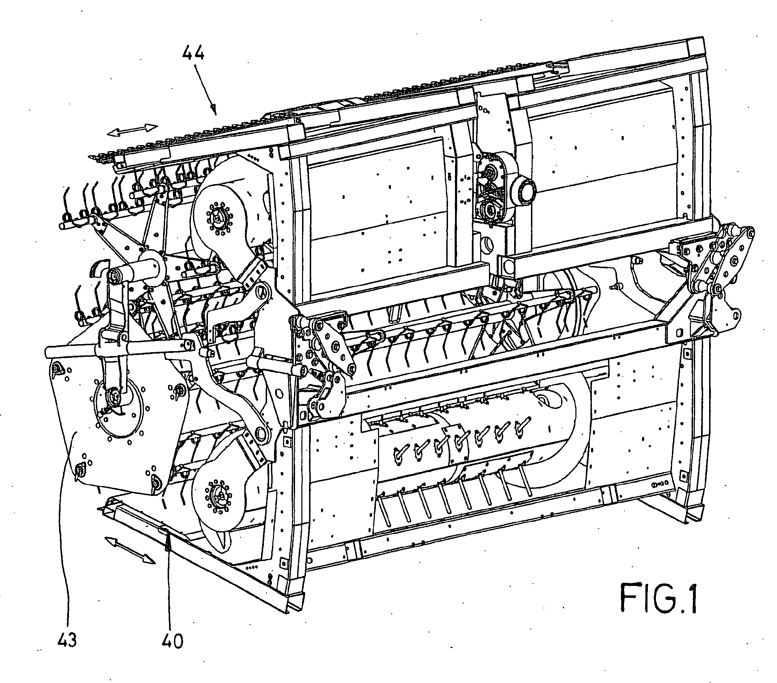

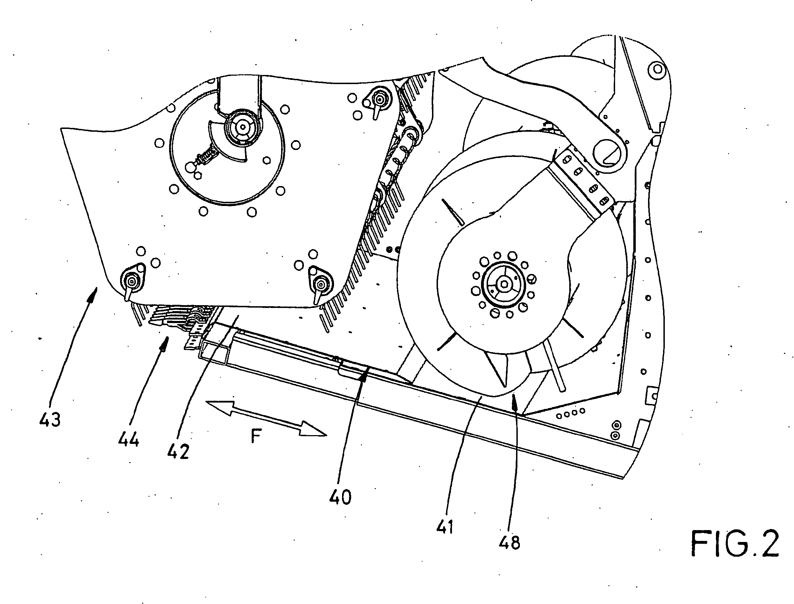

In den **Fig. 1** **und** **2** ist ein Erntevorsatz für eine Erntemaschine dargestellt. Dieser Erntevorsatz weist eine Schneidwerksmulde 40 auf, die bei dem dargestellten Ausführungsbeispiel zweigeteilt ist und einen ortsfesten Teil 41 und einen verschieblichen Teil 42 besitzt, wobei der Verschiebung, wie dies durch den Pfeil F angedeutet ist, in Fahrtrichtung erfolgt. Der verschiebliche Teil 42 trägt an seiner Frontseite Messerbalken 44, die Messer 12, 13 führen und tragen, wobei mit diesem Messerbalken 44 die Finger einer Einzugshaspel 43 zusammenwirken, so daß ein optimaler Einzug des Halmgutes bei möglichst geringem Kornverlust erzielt wird. Bei 48 ist ein Schneckenförderer mit Excenterfinger erkennbar, der ebenfalls klappbar ist.

Wie dies die **Fig. 1** zeigt, ist dieser Erntevorsatz klappbar ausgebildet, d. h. er weist ein feststehendes Mittelteil auf und zwei um in Fahrtrichtung ausgerichtete Achsen schwenkbare Seitenteile, die auf das Mittelteil aufklappbar sind, so daß dadurch während der Arbeit eine sehr große Arbeitsbreite erzielbar ist, andererseits das Erntefahrzeug problemlos über die Straße verfahren werden kann.

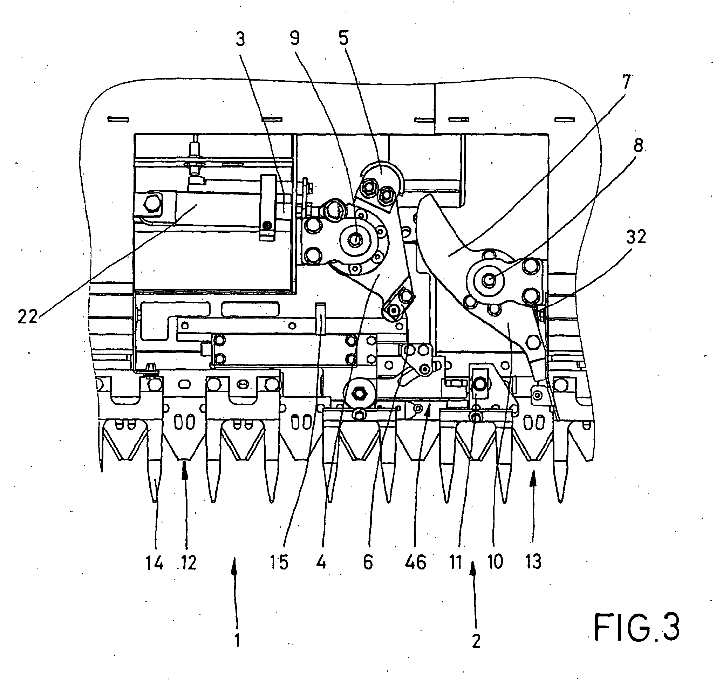

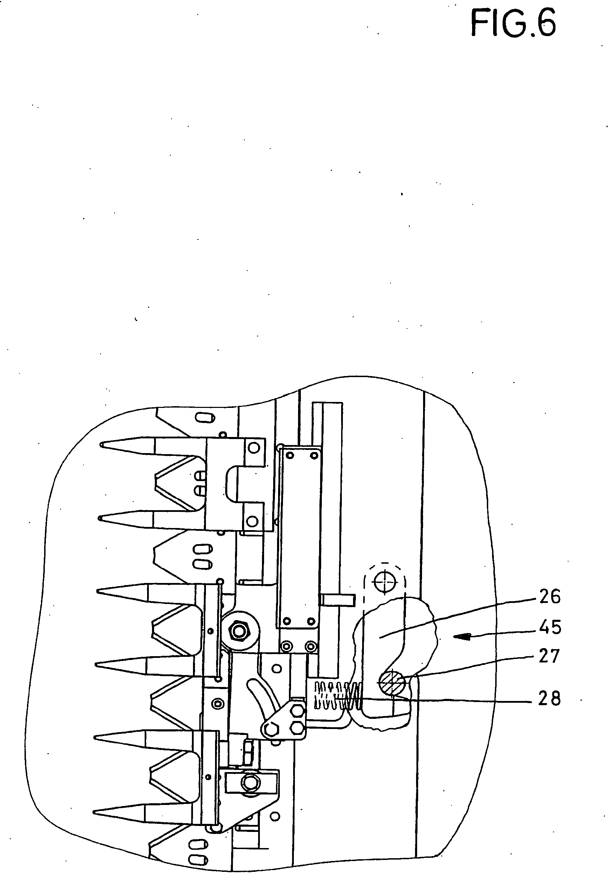

In **Fig. 3** sind zwei Messerbalkenteile 1 und 2 dargestellt, wobei das Messerbalkenteil 2 schwenkbar und das Messerbalkenteil 1 hinsichtlich der Schwenkbarkeit um eine in Fahrtrichtung weisende Drehachse ortsfest angeordnet ist. Die beiden Messerbalkenteile 1 und 2 werden durch eine Verriegelungsvorrichtung 45 (**Fig. 6**) miteinander verbunden, so daß sie synchron miteinander verfahren werden können, und zwar verfahren in Richtung der Fahrtrichtung (Pfeil F in **Fig. 2**), wie das noch zu erläutern sein wird.

An dem ortsfesten Schneidwerksmuldenteil 41 ist eine Betätigungsstange 3 angeordnet, die über eine hydraulische Kolbenzylinderanordnung 22 betätigt wird, wobei diese Betätigungsstange 3 an ihrem äußeren Ende einen Hebel 4 trägt, der eine erste Stellvorrichtung 5 und eine zweite Stellvorrichtung 6 trägt.

An dem klappbaren, aber nicht nach vorne verschiebbaren Schneidwerksmuldenteil ist um einen Drehpunkt 8 schwenkbar gelagert ein Schwinghebel 7 angeordnet, der einen Druckarm 10 aufweist. Mit dem dem Druckarm 10 gegenüberliegenden Teil des Schwinghebels 7 kommt die erste Stellvorrichtung 5 in Kontakt und kann also, wenn der Hebel 4 um seinen Drehpunkt 9 geschwenkt wird, nunmehr den Schwinghebel 7 um den Drehpunkt 8 drehen, so daß damit der Druckarm 10 mit einer Messerstellvorrichtung 11 in Kontakt kommen kann und diese so beaufschlagt, daß die in den Messerbalkenteilen 1 und 2 angeordneten Messer 12 und 13 in einer Mittelstellung der Messerfinger 14 stehen. Diese Stellung ist deutlich in **Fig. 3** erkennbar.

Mit dem Schwinghebel 7 ist eine Zugfeder 32 verbunden, die den Schwinghebel 7 wieder in die in **Fig. 3** dargestellte Ausgangslage führt.

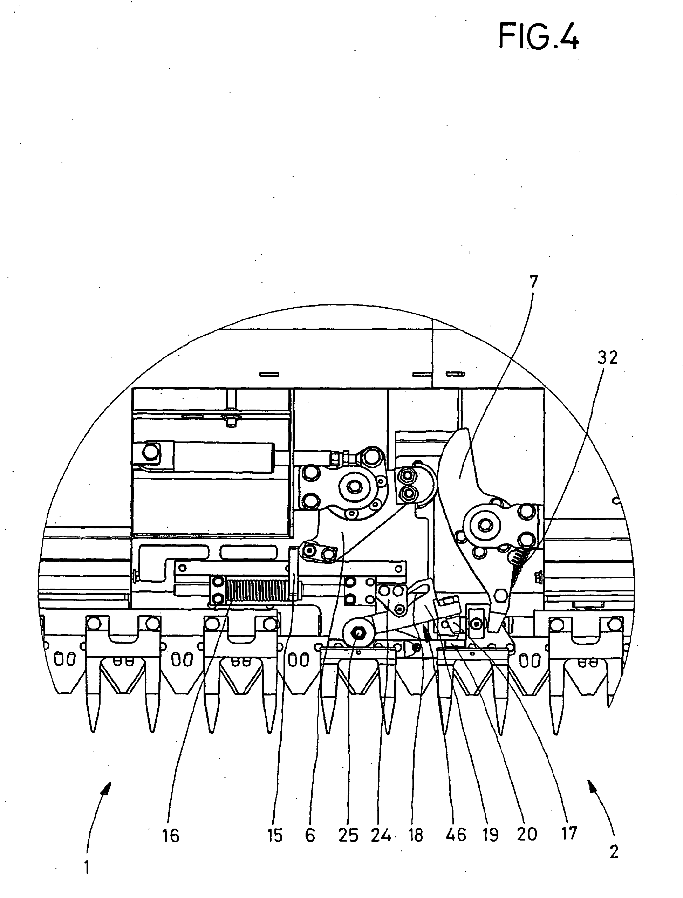

Die Stellung, in der der Druckarm 10 mit der Messerstellvorrichtung in Kontakt gekommen ist und diese Messerstellvorrichtung bewegt hat, ist in **Fig. 4** erkennbar, und nachdem der Hebel 4 über die erste Stellvorrichtung 5 den Schwinghebel 7 in die vorgenannte Stellung geführt hat, kommt die zweite Stellvorrichtung 6, die vom Hebel 4 getragen wird, mit einer Schiebestange 15 in Kontakt, wie dies die **Fig. 4** zeigt und schiebt diese Schiebestange gegen die Rückstellkraft einer Druckfeder 16 in der Zeichnung nach links.

Mit der Schiebestange 15 verbunden ist ein Bolzenelement 24, wobei der Bolzen dieses Elementes 24 in eine Kurvenbahn 18 eingreift, die von einem Verriegelungshebel 19 getragen wird.

Wird nunmehr die Schiebestange 15 aus der in **Fig. 3** dargestellten Stellung in die in **Fig. 4** dargestellte Stellung geführt, wird der Verriegelungshebel 19 angehoben. Hierbei dreht sich der Verriegelungshebel 19 um den Drehpunkt 25. Der Verriegelungshebel 19 trägt an seinem dem Drehpunkt 25 abgewandten Ende einen Verriegelungsbolzen 17, der in eine Verriegelungshülse 20 eingreifen kann, die an dem Messer 13, d. h. also an dem hinsichtlich der Schwenkbarkeit schwenkbaren Messerbalkenteil 2 angeordnet ist.

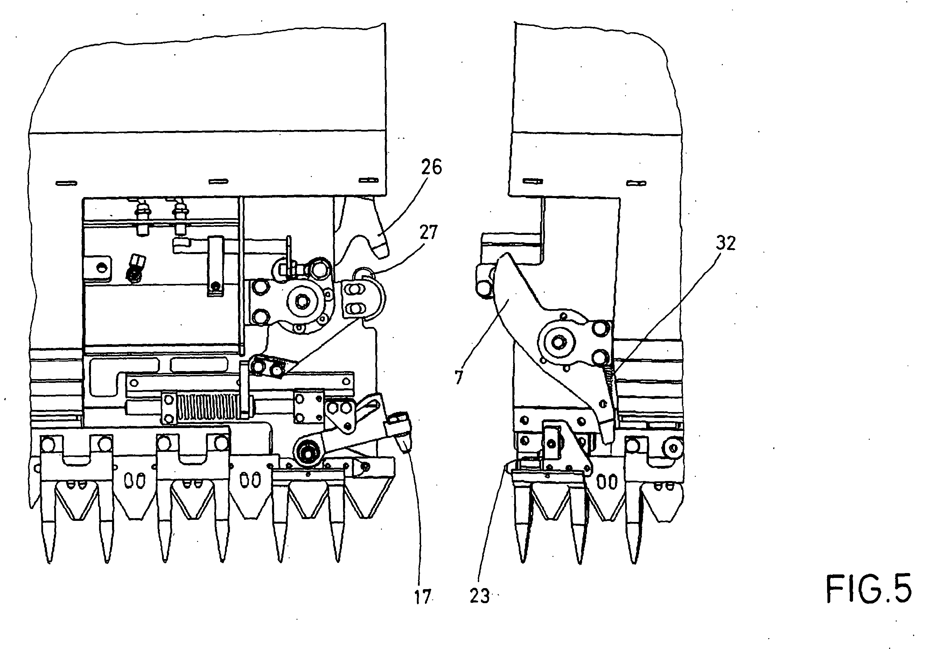

Durch diese Anordnung wird also erreicht, daß das Messer 12 des Messerbalkens 1 nicht mehr formschlüssig mit dem Messer 13 des Messerbalkenteiles 2 verbunden ist. Durch die Ausbildung des Verriegelungsbolzens 17 als Konusbolzen und die Ausbildung eines Anschlages als Konusbolzen 23 **(siehe** **Fig. 5****)** wird erreicht, daß ein Zentrieren der mit diesen Bolzen verbundenen Teile beim Einschieben in die jeweils zugeordneten Hülsen bewirkt wird.

Durch die vorbeschriebene Ausbildung des Hebels 4 und des Schwinghebels 7 wird erreicht, daß zuerst ein Zentrieren der Messer bewirkt wird, bevor der Verriegelungshebel 19 angehoben und damit die so gebildete Verriegelung 46 gelöst wird und die Schwenkbewegung des Messerbalkenteiles 2 eingeleitet werden kann.

Nicht nur die Messer 12, 13 müssen miteinander ver- bzw. entriegelt werden, sondern auch die Messerbalkenteile und die Schneidwerksmuldenteile, die geschwenkt werden sollen. Hierzu wird - wie aus **Fig. 6** erkennbar - eine Verriegelung 45 vorgeschlagen, die aus einem Riegelhaken 26 besteht, der um einen Riegelbolzen 27 greifen kann, wobei der Riegelhaken 26 an sich in die in **Fig. 6** dargestellte Stellung sicher durch eine entsprechende Rückstell- oder Druckfeder 28 geführt wird.

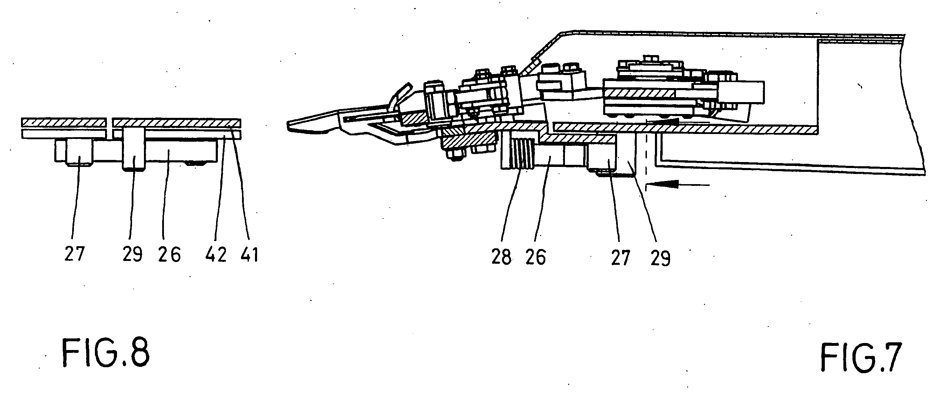

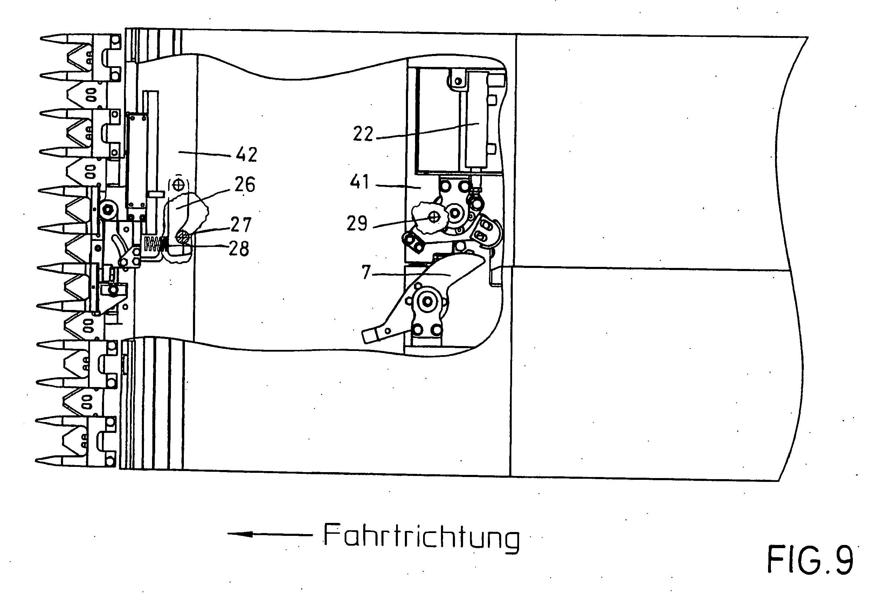

Die Entriegelung der Verriegelung 45 wird dadurch gebildet, daß an dem nicht verschiebbaren, d. h. ortsfesten Schneidwerksmuldenteil 41 ein Betätigungsanschlag 29 vorgesehen ist (**Fig. 7** **und** **Fig. 9**), gegen den der Riegelhaken 26 zur Anlage kommt, wenn das ortsbewegliche Schneidwerksmuldenteil 42 nach hinten verschoben wird und in die Endposition kommt. Hierbei drückt dann der Betätigungsanschlag 29 den Riegelhaken 26 aus dem Eingriff mit dem Verriegelungsbolzen 27, und zwar gegen die Kraft der Rückstellfeder 28, so daß damit die Möglichkeit gegeben ist, das schwenkbare Bauteil um eine in Fahrtrichtung weisende Achse auf das feststehende Bauteil der Erntemaschine zu klappen.

**Fig. 9** zeigt dabei den Betätigungsbolzen 29, den Riegelbolzen 27 und den Riegelhaken 26 in einer aufgebrochenen Stellung des darüber angeordneten Bleches.

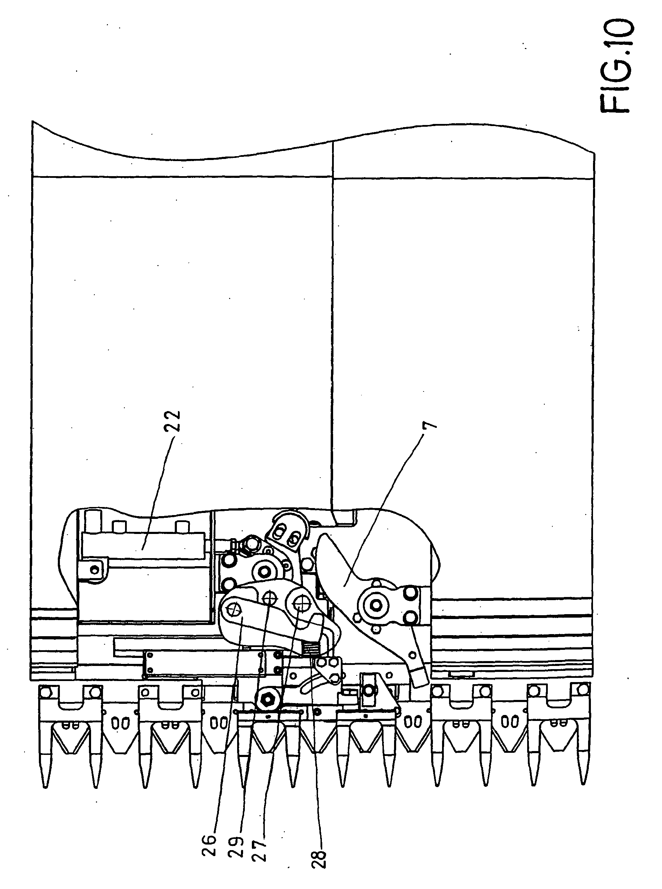

Auch **Fig. 10** zeigt in einer aufgebrochenen Darstellung die Anordnung des Riegelhakens 26 des Betätigungsbolzens 29 und des Riegelbolzens 27, die unterhalb der Verriegelung 46 angeordnet sind.

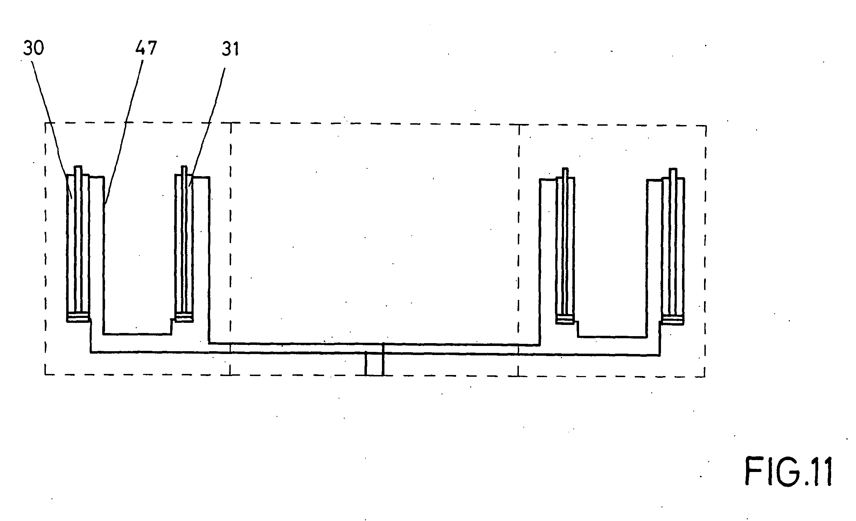

Die Schemadarstellung in **Fig. 11** zeigt zwei Hydraulikzylinder 30 und 31 für das nach vorne verschiebbare Schneidwerksmuldenteil 42, und hieraus wird ersichtlich, daß die Zylinder 30, 31 im Master-Slave-System miteinander verbunden sind, d. h. die Leitung 47 führt von der Zylinderringseite zur Kolbenfläche des anderen Zylinders und hierdurch wird die Anordnung so getroffen, daß die Querschnittsfläche der Zylinderringseite gleich der Kolbenfläche des anderen Zylinders ist.

## Patentansprüche

1. Selbstfahrende Erntemaschine mit in Fahrtrichtung abstandsveränderbarer, zweigeteilter Schneidwerksmulde (40), deren einer Teil (41) ortsfest mit der Erntemaschine verbunden ist und deren anderer Teil (42) Messer (12, 13) tragende und führende Messerbalken (44) trägt und abstandsveränderbar mit dem ortsfesten Teil der Schneidwerksmulde (41) verbunden ist, wobei der Schneidwerksmulde (40) eine lageveränderbare Einzugshaspel (43) zugeordnet ist, **dadurch gekennzeichnet, dass** quer zur Fahrtrichtung, d. h. um in Fahrtrichtung ausgerichtete Schwenkachsen eine mehrteilige Schneidwerksmulde (40), eine mehrteilige Haspel (43), ein mehrteiliger Messerbalken (44) und Messer (12, 13) vorgesehen sind, wobei die Bauteile klappbar aneinander anschließen.

2. Erntemaschine nach Anspruch 1, **dadurch gekennzeichnet, daß** die einzelnen Messer (12, 13) in Arbeitsposition über eine Verriegelung (46) und die Schneidwerksmuldenteile (41, 42) bzw. Messerbalkenteile (1, 2) über eine Verriegelung (45) miteinander verbunden sind, so daß sie synchron miteinander verfahren werden können.

3. Erntemaschine nach Anspruch 1 oder 2, **dadurch gekennzeichnet, daß** die zwei- oder mehrteiligen Messer (12, 13) jeweils über einen Verriegelungsbolzen (17) an den jeweiligen Trennstellen formschlüssig miteinander verbindbar sind und eine Messerstellvorrichtung (11) vorgesehen ist, durch die die Messer (12, 13) in eine Mittelstellung zwischen den Messerfingern (14) geführt werden, bevor der Verriegelungsbolzen (17) einrastet.

4. Erntemaschine nach Anspruch 3, **dadurch gekennzeichnet, daß** der Verriegelungsbolzen (17) und die Messerstellvorrichtung (11) auf den Messern (12, 13) angeordnet und mit den Messerteilen (12, 13) verschiebbar sind.

5. Erntemaschine nach Anspruch 3 oder 4, **dadurch gekennzeichnet, daß** der Verriegelungsbolzen (17) quer zur Längserstreckung der Messer (12, 13) ausgerichtet an dem einen Messer, z. B. (12), schwenkbar gelagert ist und in dem zugewandten Ende des anderen Messers, z. B. (13), in einer Verriegelungshülse (20) arretierbar ist.

6. Erntemaschine nach einem oder mehreren der vorhergehenden Ansprüche, **gekennzeichnet durch** einen um einen Drehachse (8) schwenkbaren Schwinghebel (7), der von einer Betätigungsstange (3) beaufschlagt mit einem Druckarm (10) die Messerstellvorrichtung (11) beaufschlagt bis das die mit dieser Messerstellvorrichtung (11) verbundenen Messer (12, 13) in einer Mittelstellung zwischen den Messerfingern (14) stehen.

7. Erntemaschine nach Anspruch 6, **dadurch gekennzeichnet, daß** die Betätigungsstange (3) einen um eine Drehachse (9) schwenkbaren Hebel (4) mit einer ersten Stellvorrichtung (5) und einer zweiten Stellvorrichtung (6) trägt, wobei die erste Stellvorrichtung (5) den Schwinghebel (7) und die zweite Stellvorrichtung (6) eine Schiebestange (15) beaufschlagt, die über eine Kurvenbahn (18) den Verriegelungsbolzen (17) aus der Verriegelungshülse (20) bewegt.

8. Erntemaschine nach einem oder mehreren der vorhergehenden Ansprüche 6 oder 7, **dadurch gekennzeichnet, daß** die Drehachse (8) des Schwinghebels (7) und die Drehachse (9) des Hebels (4) ortsfest mit den nicht verschiebbaren Schneidwerksmuldenteilen (41) verbunden sind.

9. Erntemaschine nach einem oder mehreren der vorhergehenden Ansprüche 6 bis 8, **gekennzeichnet durch** eine Rückstellfeder (32) für den um die Drehachse (8) drehbar gelagerten Schwinghebel (7).

10. Erntemaschine nach Anspruch 7, **dadurch gekennzeichnet, daß** die Schiebestange (15) gegen die Rückstellkraft einer Druckfeder (16) bewegbar ist.

11. Erntemaschine nach einem oder mehreren der vorhergehenden Ansprüche 7 bis 10, **dadurch gekennzeichnet, daß** der Schwinghebel (7) mit seinem Druckarm (10) die Messerstellvorrichtung (11) beaufschlagt, bevor die die Kurvenbahn (18) tragende Schiebestange (15) von der zweiten Stellvorrichtung (6) des Hebels (4) beaufschlagt wird.

12. Erntemaschine nach einem oder mehreren der vorhergehenden Anspruche 6 bis 11, **dadurch gekennzeichnet, daß** die Betätigungsstange (3) von einer hydraulischen Kolbenzylinderanordnung (22) angetrieben ist.

13. Erntemaschine nach Anspruch 7, **dadurch gekennzeichnet, daß** die Schiebestange (15) nur linear verschoben wird.

14. Erntemaschine nach einem oder mehreren der vorhergehenden Ansprüche, **gekennzeichnet durch** einen Konusbolzen (23) zur Zentrierung der miteinander in Kontakt kommenden Messer (12, 13).

15. Erntemaschine nach Anspruch 3, **dadurch gekennzeichnet, daß** der Verriegelungsbolzen (17) als Konusbolzen ausgebildet ist.

16. Erntemaschine, nach Anspruch 1 oder 2, **dadurch gekennzeichnet, daß** die aus einem Riegelbolzen (27) und einem Riegelhaken (26) gebildete Verriegelung (45) zweier benachbarter Schneidwerksmuldenteile (40) oder Messerbalkenteile (1, 2) auf den verschiebbaren Messerbalkenteilen (1, 2) angeordnet ist und daß diese automatisch entriegeln, wenn die Messerbalkenteile (1, 2) in die hintere Position gefahren werden.

17. Erntemaschine nach Anspruch 16, **gekennzeichnet durch** einen auf der ortsfesten Schneidwerksmulde (41) angeordneten Betätigungsanschlag (29) für den Riegelhaken (26).

18. Erntemaschine nach Anspruch 16, **gekennzeichnet durch** eine Rückstellfeder (28) für den Riegelhaken (26).

19. Erntemaschine nach Anspruch 1, **dadurch gekennzeichnet, daß** die einzelnen Messerbalkenteile (1, 2) mit Hilfe eines Hydraulikzylinderpaares (30, 31) verfahren werden, welches als Master-Slave-System ausgebildet ist.

20. Erntemaschine nach Anspruch 19, **dadurch gekennzeichnet, daß** bei einer dreiteiligen Schneidwerksmulde (40) nur die äußeren Messerbalkenteile Hydraulikzylinderpaare aufweisen.

## Claims

1. Self-propelled harvester with a distance-adjustable, two-part cutting mechanism trough (40), one part (41) of which is fixedly connected to the harvester and the other part of which (42) bears cutters (12, 13) and bearing and guiding cutter bars (44) and is distance-adjustably connected to the fixed part of the cutting mechanism trough (41), where the cutting mechanism trough (40) is assigned a pulling-in winch (43), **characterised in that** a multi-part cutting mechanism trough (40), a multi-part winch (43), a multi-part cutter bar (44) and cutters (12, 13) are disposed across the direction of travel, that is, around pivoting axles aligned in the direction of travel, where the component parts are foldably connected to one another.

2. Harvester in accordance with claim 1, **characterised in that** the individual cutters (12, 13) are connected one to the other in the working position via a locking element (46) and the cutting mechanism trough parts (41, 42) or the cutter bar parts (1, 2) via a locking element (45) so that they can be displaced synchronously.

3. Harvester in accordance with claim 1 or 2, **characterised in that** the two- or multi-part cutters (12, 13) can be positively connected at the respective parting points via a locking bolt (17) and a cutter positioning device (11) is provided by which the cutters (12, 13) are guided into a midway position between the cutter fingers (14), before the locking bolt (17) engages.

4. Harvester in accordance with claim 3, **characterised in that** the locking bolt (17) and the cutter positioning device (11) are arranged on the cutters (12, 13) and can be displaced with the cutter parts (12, 13).

5. Harvester in accordance with claim 3 or 4, **characterised in that** the locking bolt (17) is mounted pivotably across the longitudinal extension of the cutters (12, 13) and aligned with one of the cutters, e.g. (12), and can be locked, e.g. in a locking sleeve (20), **in that** end of the other cutter, e.g. (13), which is turned towards it.

6. Harvester in accordance with one or more of the foregoing claims, **characterised by** an oscillating lever (7) which can pivot about an axle (8), which oscillating lever, when acted on by an actuating rod (3), acts on the cutter positioning device (11) through a pressure arm (10) until the cutters (12, 13) connected to this cutter positioning device (11) are in a midway position between the cutter fingers (14).

7. Harvester in accordance with claim 6, **characterised in that** the actuating rod (3) bears a lever (4) which can pivot around an axle (9) and has a first positioning device (5) and a second positioning device (6), where the first positioning device (5) acts on the oscillating lever (7) and the second positioning device (6) acts on a push rod (15) which via a curved track (18) moves the locking bolt (17) out of the locking sleeve (20).

8. Harvester in accordance with one or more of the foregoing claims 6 or 7, **characterised in that** the axle (8) of the oscillating lever (7) and the axle (9) of the lever (4) are fixedly connected to the parts of the non-displaceable cutting mechanism trough (41).

9. Harvester in accordance with one or more of the foregoing claims 6 to 8, **characterised by** a restoring spring (32) for the oscillating lever (7) rotatably fixed around the axle (8).

10. Harvester in accordance with claim 7, **characterised in that** the push rod (15) can be moved against the restoring force of a compression spring (16).

11. Harvester in accordance with one or more of the foregoing claims 7 to 10, **characterised in that** the oscillating lever (7) acts on the cutter positioning device (11) by a pressure arm (10), before the push rod (15) bearing the curved track (18) is acted on by the second positioning device (6) of the lever (4).

12. Harvester in accordance with one or more of the foregoing claims 6 to 11, **characterised in that** the actuating rod (3) is driven by an hydraulic cylinder arrangement (22).

13. Harvester in accordance with claim 7, **characterised in that** the push rod (15) is displaced only linearly.

14. Harvester in accordance with one or more of the foregoing claims, **characterised by** a taper bolt (23) for centring the cutters (12, 13) coming into contact with each other.

15. Harvester in accordance with claim 3, **characterised in that** the locking bolt (17) is constructed as a taper bolt.

16. Harvester in accordance with claim 1 or 2, **characterised in that** the element (45) for locking two adjacent parts of a cutting mechanism trough (40) or cutter bar parts (1, 2), which element comprises a locking bolt (27) and locking hook (26), is arranged on the displaceable cutter bar parts (1, 2) and **in that** these unlock automatically, if the cutter bar parts (1, 2) are moved into the rear position.

17. Harvester in accordance with claim 16, **characterised by** an actuating stop (29) for the locking hook (26) which actuating stop (29) is arranged on the fixed cutting mechanism trough (41).

18. Harvester in accordance with claim 16, **characterised by** a restoring spring (28) for the locking hook (26).

19. Harvester in accordance with claim 1, **characterised in that** the individual cutter bar parts (1, 2) are displaced with the aid of a pair of hydraulic cylinders (30, 31) which are constructed as a master-slave system.

20. Harvester in accordance with claim 19, **characterised in that**, if the cutting mechanism trough (40) is in three parts, only the outer cutter bar parts incorporate pairs of hydraulic cylinders.

## Revendications

1. Moissonneuse automotrice comprenant une auge (40) du dispositif de coupe, partagée en deux et à distance modifiable dans la direction de marche, auge dont une partie (41) est raccordée de manière fixe à la moissonneuse et dont l'autre partie (42) porte une barre porte-lames (44) supportant et guidant des lames (12,13) et est raccordée à distance modifiable à la partie fixe de l'auge (41) du dispositif de coupe, dans laquelle un rabatteur de ramassage (43), dont on peut modifier la position, peut être affecté à l'auge (41) du dispositif de coupe, **caractérisée en ce que**, transversalement à la direction de marche, c'est-à-dire autour d'axes pivots alignés dans la direction de marche, il est prévu une auge (40) de dispositif de coupe en plusieurs parties, un rabatteur (43) en plusieurs parties, une barre porte-lames (44) en plusieurs parties (44) et des lames (12, 13), les composants se raccordant l'un à l'autre par pivotement.

2. Moissonneuse selon la revendication 1, **caractérisée en ce que** les lames individuelles (12, 13) en position de travail sont raccordées l'une à l'autre via un verrouillage (46) et les parties d'auge (41, 42) du dispositif de coupe ou les parties de barre porte-lames (1, 2) sont raccordées l'une à l'autre via un verrouillage (45) de sorte qu'elles puissent être déplacées conjointement en synchronisme.

3. Moissonneuse selon la revendication 1 ou 2, **caractérisée en ce que** les lames (12, 13) à deux parties ou plus peuvent respectivement être raccordées conjointement mécaniquement via un boulon de verrouillage (17) aux points de séparation respectifs et il est prévu un dispositif de réglage de lames (11), à l'aide duquel les lames (12, 13) peuvent être guidées dans une position centrale entre les doigts de lames (14) avant que le boulon de verrouillage (17) ne s'enclenche.

4. Moissonneuse selon la revendication 3, **caractérisée en ce que** le boulon de verrouillage (17) et le dispositif de réglage de lames (11) sont agencés sur les lames (12, 13) et peuvent être déplacés avec les parties de lames (12, 13).

5. Moissonneuse selon la revendication 3 ou 4, **caractérisée en ce que** le boulon de verrouillage (17) est monté à pivotement dans une orientation transversale à l'extension longitudinale des lames (12,13) sur la première lame, par exemple (12), et peut être bloqué à l'extrémité en regard de l'autre lame, par exemple (13), dans une douille de verrouillage (20).

6. Moissonneuse selon une ou plusieurs des revendications précédentes, **caractérisée par** un levier oscillant (7) pivotant autour d'un axe de rotation (8) et qui, en étant pressé par une barre d'actionnement, presse à l'aide d'un bras de pression (10) le dispositif de réglage de lames (11) jusqu'à ce que les lames (12, 13) raccordées à ce dispositif de réglage de lames (11) se trouvent en position centrale entre les doigts de lames (14).

7. Moissonneuse selon la revendication 6, **caractérisée en ce que** la barre d'actionnement (3) porte un levier (4) pivotant autour d'un axe de rotation (9) avec un premier dispositif de réglage (5) et un deuxième dispositif de réglage (6), dans laquelle le premier dispositif de réglage (5) presse le levier oscillant (7) et le deuxième dispositif de réglage (6) presse une barre coulissante (15), qui déplace via une piste de came (18) le boulon de verrouillage (17) hors de la douille de verrouillage (20).

8. Moissonneuse selon une ou plusieurs des revendications 6 ou 7, **caractérisée en ce que** l'axe de rotation (8) du levier oscillant (7) et l'axe de rotation du levier (4) sont raccordés de manière fixe aux parties d'auge (41) du dispositif de coupe qui ne sont pas déplaçables.

9. Moissonneuse selon une ou plusieurs des revendications 6 à 8, **caractérisée par** un ressort de rappel (32) pour le levier oscillant (7) monté à rotation autour de l'axe de rotation (8).

10. Moissonneuse selon la revendication 7, **caractérisée en ce que** la barre coulissante (15) est déplaçable à l'encontre de la force de rappel d'un ressort de compression (16).

11. Moissonneuse selon une ou plusieurs revendications précédentes, **caractérisé en ce que** le levier oscillant (7) presse le dispositif de réglage de lames (11) avec son bras de pression (10) avant que la barre coulissante (15) portant la piste de came (18) ne soit pressée par le deuxième dispositif de réglage (6) du levier (4).

12. Moissonneuse selon une ou plusieurs revendications précédentes, **caractérisée en ce que** la barre d'actionnement (3) est entraînée par un agencement hydraulique à piston-cylindre (22).

13. Moissonneuse selon la revendication 7, **caractérisée en ce que** la barre coulissante (15) est seulement déplacée de manière linéaire.

14. Moissonneuse selon une ou plusieurs revendications précédentes, **caractérisée par** un boulon conique (23) pour centrer les lames (12, 13) venant en contact l'une avec l'autre.

15. Moissonneuse selon la revendication 3, **caractérisée en ce que** le boulon de verrouillage (17) se présente sous la forme d'un boulon conique.

16. Moissonneuse selon la revendication 1 ou 2, **caractérisée en ce que** le verrouillage (45), formé d'un boulon de verrouillage (27) et d'un crochet de verrouillage (26), de deux parties d'auge (40) du dispositif de coupe ou de parties de barre porte-lames (1, 2) voisines est agencé sur les parties de barre porte-lames (1, 2) déplaçables et **en ce que** celles-ci se déverrouillent automatiquement lorsque les parties de barre porte-lames (1, 2) sont déplacées en position arrière.

17. Moissonneuse selon la revendication 16, **caractérisée par** une butée d'actionnement (29) agencée sur l'auge fixe (41) du dispositif de coupe pour le crochet de verrouillage (26).

18. Moissonneuse selon la revendication 16, **caractérisée par** un ressort de rappel (28) pour le crochet de verrouillage (26).

19. Moissonneuse selon la revendication 1, **caractérisée en ce que** les parties de barre porte-lames individuelles (1, 2) sont déplacées à l'aide d'une paire de cylindres hydrauliques (30, 31), qui se présente sous la forme d'un système maître-esclave.

20. Moissonneuse selon la revendication 19, **caractérisée en ce que**, dans une auge (40) du dispositif de coupe en trois parties, seules les parties de barre porte-lames extérieures présentent des paires de cylindres hydrauliques.
